# EUROPEAN PATENT APPLICATION

(11) **EP 4 624 427 A1**
(43) Date of publication of application: **01.10.2025**
(21) Application number: 24165984.6
(22) Date of filing: 25.03.2024
(51) Int. Cl.: C02F 3/04, C02F 3/10

(54) **BIOREACTOR AND METHOD FOR TREATING WASTEWATER IN A BIOREACTOR**

(71) Applicant: Owatec Group Oy, 91910 Tupos (FI)
(72) Inventor: PELLINEN, Jaakko, 90520 Oulu (FI); VEIJOLA-KARA, Miska, 90130 Oulu (FI); ANTIKAINEN, Jarmo, 90250 Oulu (FI); ALATALO, Mikko, 90510 Oulu (FI)
(74) Representative: Berggren Oy

(57) **Abstract**

The bioreactor includes a tank (2), a carrier material bed (4) inside said tank, an inflow pipe (6), a first pump (12) for pumping wastewater into the tank via the inflow pipe, a second pump (10) and a circulation pipe (20) for pumping wastewater above the carrier material bed and second nozzles (24) for spraying wastewater on top of the carrier material bed (4). Said first and second pumps are multiphase pumps comprising a gas injector (62) for injecting gas, such as air or oxygen, to the wastewater to create pressurized gas-wastewater mixture.

## Description

### Technical Field

The invention relates to a bioreactor and a method for threating wastewater in a bioreactor.

Biological treatment can be used to enhance the wastewater treatment process of almost all types of wastewaters. One biological wastewater treatment process involves treating wastewater in a bioreactor under aerobic conditions. Bioreactor consists of a vessel and is filled with a high specific surface area material, such as rocks, gravel, special pre-formed plastic parts providing support medium for biofilm growth. The microbiological processes in the reactor reduce the water's chemical and biological oxygen demand (COD and BOD). With suitable wastewater, the microbes can also lower the water's nitrogen and phosphorus content. The environmental conditions inside the bioreactor, such as temperature, nutrient concentrations, pH, and dissolved gases, especially oxygen for aerobic processes, affect the growth and productivity of the organisms. In aerobic bioreactors, oxygen must be added to reactor to maintain optimum conditions for the microbial digestion. Since oxygen is relatively insoluble in water, air or oxygen must be added continuously.

Known bioreactors typically have air blowers to create air bubbles into the bioreactor. However, these air blowers have a high energy consumption but still quite low dissolved oxygen transfer rate.

Document CN 215559255 U discloses a sewage treatment system including bubble generation system and a sewage treatment reactor. The bubble generation system comprises a sewage lifting pump and a bubble generator. The inlet of the pump is connected to the sewage inlet, the water outlet of the pump is connected to the inlet of the bubble generator and the outlet of the bubble generator is connected to the sewage treatment reactor. At the bottom of the sewage treatment reactor there may be an aerator for aerating the sewage inside the reactor.

Document US 20090032460 A1 discloses a wastewater treatment method and a wastewater treatment equipment comprising an adjustment tank, a reaction vessel and an aeration tank. Wastewater containing organic matter is first introduced into an adjustment tank and then pumped into the reaction vessel containing a bubble generator producing micronanobubbles to the wastewater to partially oxidate the wastewater. The partially oxidized wastewater is then introduced into an aeration tank equipped with a circulating pump, which pumps sludge from the aeration tank back into the reaction vessel. The sludge is treated with micronanobubbles in the reaction vessel and then returned to the aeration tank.

The wastewater treatment methods disclosed above are complicated and require complex purification devices.

An object of the invention is to provide a bioreactor and a method for treating wastewater in a bioreactor, with which drawbacks relating to the prior art can be diminished.

The object of the invention is achieved with the bioreactor and method, which are characterized in what is disclosed in the independent patent claims. Some preferred embodiments of the invention are disclosed in the dependent claims.

### Summary of the invention

The bioreactor according to the invention includes a tank, a carrier material bed inside said tank, an inflow pipe, a first pump for pumping wastewater into the tank via the inflow pipe, a second pump and a circulation pipe for pumping wastewater above the carrier material bed and second nozzles for spraying wastewater on top of the carrier material bed. Said second pump is a multiphase pump comprising a gas injector for injecting gas, such as air or oxygen, to the wastewater to create pressurized gas-wastewater mixture.

In some embodiments of the bioreactor according to the invention the circulation pipe has at least one second pressure valve configured to maintain the pressure of the gas-wastewater mixture inside the circulation pipe and to release pressurised gas-wastewater to flow through the second nozzles.

In some embodiments of the bioreactor according to the invention said second nozzles comprise a first jet pipe and a second jet pipe, the first and second jet pipes including an aperture configured to generate a wastewater jet and a bouncing surface configured to bounce the generated wastewater jet towards the carrier material bed.

In some embodiments of the bioreactor according to the invention the first jet pipe is configured to direct the wastewater jet towards the bouncing surface of the second jet pipe and the second jet pipe is configured to direct the wastewater jet towards the bouncing surface of the first jet pipe and the bouncing surfaces of the first and second jet pipes are configured to direct the bounced wastewater jets to collide to generate a combined wastewater spray directed towards the carrier material bed.

In some embodiments of the bioreactor according to the invention said first pump is a multiphase pump comprising a gas injector for injecting gas, such as air or oxygen, to the wastewater to create pressurized gas-wastewater mixture.

In some embodiments of the bioreactor according to the invention the inflow pipe has a discharge end inside the tank below the carrier material bed, first nozzles for discharging wastewater from the inflow pipe and at least one first pressure valve configured to maintain the pressure of the gas-wastewater mixture inside the inflow pipe and to release pressurised gas-wastewater to flow through the first nozzles.

In some embodiments of the bioreactor according to the invention the first pump and/or the second pump are/is configured to generate 5,0 bar- 7,0 bar pressure to the gas-wastewater mixture.

In some embodiments of the bioreactor according to the invention the at least one second pressure valve and/or the at least one first pressure valve are/is configured to maintain 5,0 bar- 7,0 bar pressure inside the inflow pipe and/or the circulation pipe.

In some embodiments of the bioreactor according to the invention the apparatus further comprises an outflow pipe and a third pump for removing treated wastewater from the tank.

In some embodiments of the bioreactor according to the invention the tank comprises a partition dividing the tank to a first section and to a second section and a flow port connecting the first and second sections.

In some embodiments of the bioreactor according to the invention the inflow pipe extends into the first section and the intake ends of the circulation pipe and the outflow pipe extend into the second section.

In some embodiments of the bioreactor according to the invention the tank comprises a deck for covering and sealing the tank, which deck has at least one openable lid, and at least one venting pipe for lowering the pressure inside the tank.

The method of treating wastewater in the bioreactor described above comprises steps of pumping wastewater from the tank above the filter material bed, injecting gas, such as air or oxygen, to the wastewater to create pressurized gas-wastewater mixture and releasing the pressurized gas-wastewater mixture to flow through the second nozzles causing a pressure drop in the gas-wastewater mixture generating gas containing microbubbles into the wastewater sprayed through the second nozzles on top of the carrier material bed.

Some embodiments of the method according to the invention comprise steps of pumping wastewater into the tank via an inflow pipe, injecting gas, such as air or oxygen, to the wastewater to create pressurized gas-wastewater mixture and releasing the pressurized gas-wastewater mixture from the inflow pipe into the tank causing a pressure drop in the gas-wastewater mixture generating gas containing microbubbles into the released wastewater.

Some embodiments of the method according to the invention comprise steps of generating pressurized gas-wastewater mixture, which, when released to or near the atmospheric pressure, creates into the wastewater microbubbles having a diameter less than 10 µm.

An advantage of the invention is, that it enhances the purification efficiency of the bioreactor by increasing the oxygen supply for the microbes.

A further advantage of the invention is, that the treatment time of the wastewater in the bioreactor can be reduced thanks to the enhanced purification efficiency, which increases the treatment capacity of the treatment apparatus.

Another advantage of the invention is, that the size of the bioreactor can be reduced without diminishing the treatment capacity. Since separate aeration pipes are no longer needed in the bioreactor, there is more room for the wastewater to be treated.

Another advantage of the invention is, that is diminishes the energy consumption of the bioreactor because large, energy-wasting air blowers are no longer needed.

### Brief Description of the Drawings

In the following the invention will be described in detail, by way of examples, with reference to the accompanying drawings in which,
- Fig. 1: depicts an example of a bioreactor according to the invention as a schematic side elevation,
- Fig. 2a: depicts an embodiment of the bioreactor according to the invention as a side elevation,
- Fig. 2b: depicts a schematic cross section of the embodiment of the bioreactor shown in fig. 2a,
- Fig. 3: depicts the second nozzle belonging to the bioreactor as a side elevation,
- Fig. 4: depicts the pump belonging to the bioreactor as a partial cross-section.

### Detailed Description

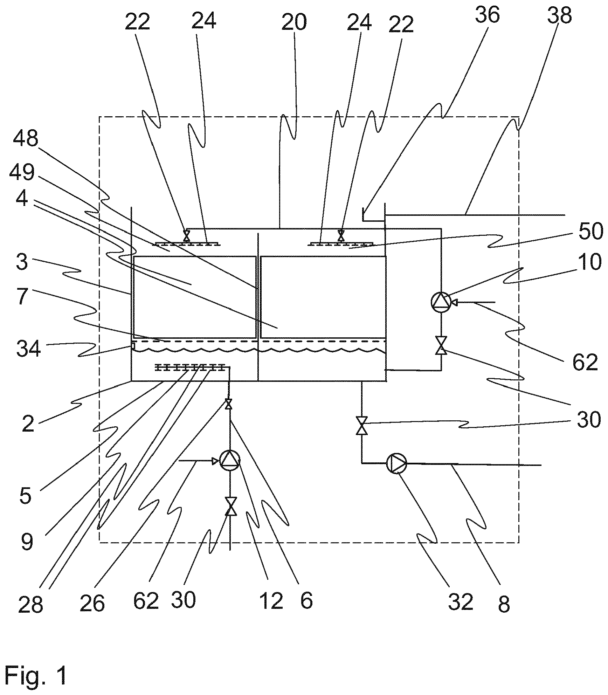

In figure 1 an example of the bioreactor according to the invention is shown as a schematic side elevation view.

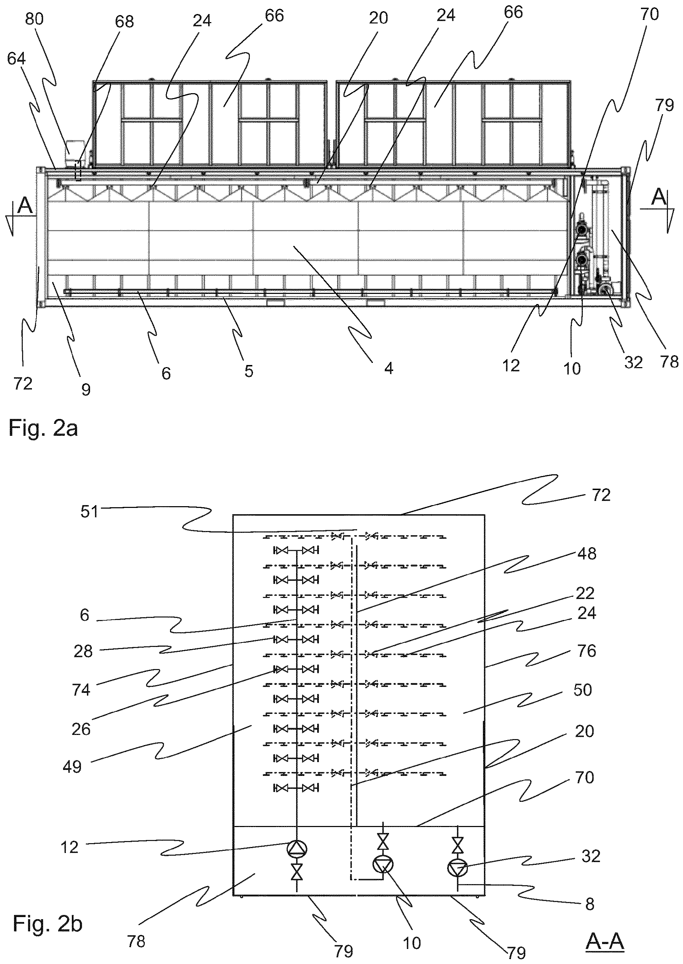

The bioreactor comprises a tank 2 for receiving and treating wastewater. Tank has a side wall 3 and a bottom 5, which define a watertight space for the wastewater to be treated. A partition 48 inside the tank divides the tank into two sections: first section 49 and second section 50. The first and second sections are connected together via flow port 51 (fig. 2b) allowing the wastewater to flow from the first section into the second section. Inside both sections there is a carrier material bed 4 acting as a support material for a biofilm growth. The carrier material may comprise biocarbon, geopolymer structures or plastic objects such as shredded plastic bottles, for example. The carrier material bed rests on a water permeable filter support 7 apart from the bottom 5 of the tank. The lower part of the tank below the carrier material bed acts as collection sink 9 for the wastewater, which has percolated through the carrier material bed. The volume of the tank and the collection sink can be dimensioned according to the desired treatment capacity of the apparatus. Near the upper edge of the side wall there is an overflow chute 36 and overflow pipe 38 to remove wastewater form the tank in possible overfill situations.

Near the bottom of the tank there is an inflow pipe 6 which extends into the first section 49 of the tank 2. The intake end of the inflow pipe is connected to a wastewater source (not shown), which can be wastewater pretreatment unit or a sewage network, for example. When air is used as oxygen rich gas, the free end of the gas injector can open into the ambient air. When other gases are used, the gas injector is connected to a suitable gas-source (not shown), such as a gas container. A first pump 12 is installed between the intake end and the discharge end of the inflow pipe for pumping wastewater from the wastewater source into the first section of the tank below the carrier material bed 4, i.e. into the collection sink 9. The part of the inflow pipe locating inside the tank is furnished with first nozzles 28, through which the wastewater is sprayed into the tank. The first pump may run periodically or preferably continuously.

The first pump 12 is a multiphase pump comprising a gas injector 62 configured to inject oxygen rich gas, such as air or pure oxygen, from a gas-source (not shown) into the wastewater to create pressurised gas-wastewater mixture flowing inside the inflow pipe. Thus, oxygen is injected into the wastewater before the wastewater enters into the tank. The first nozzles 28 are connected to the inflow pipe 6 via first pressure valves 26, which are configured to maintain the pressure of the gas-wastewater mixture inside the inflow pipe within predetermined level and simultaneously release pressurised gas-wastewater to flow through the first nozzles 28. During operation of the biofilter the first nozzles are submerged into the wastewater. i.e. they lie below the level of the wastewater. However, the hydrostatic pressure at the depth of the first nozzles is close to the atmospheric pressure, whereby releasing the pressurised gas-wastewater mixture into collection sink causes a sudden pressure drop in the gas-wastewater mixture, which generates gas containing microbubbles into the wastewater. Since the diameter of the created gas containing microbubbles is very small, they typically stay in the wastewater for a long time. Therefore, at least part of part bubbles generated by the first pump are still present in the wastewater, when the circulated wastewater enters to the carrier material bed 4 as explained later.

The bioreactor further comprises a circulation pipe 20 and a second pump 10 for pumping wastewater from the second section 50 of the tank to above the carrier material beds 4 of the first and second sections. The first end of the circulation pipe extends through the side wall 3 of the tank into the collection sink 9 of the second section and the second end of the circulation pipe extends above the carrier material bed. At the second end of the circulation pipe there are second nozzles 24, through which wastewater is sprayed on top of the carrier material bed in form of a fine spray. The sprayed wastewater slowly percolates through the carrier material bed back to the collection sink. The wastewater is pumped continuously to circulate the wastewater through the carrier material bed.

The second pump 10 is a multiphase pump comprising a gas injector 62 configured to inject oxygen rich gas, such as air or pure oxygen, into the wastewater to create pressurised gas-wastewater mixture flowing inside the circulation pipe. When air is used as oxygen rich gas, the free end of the gas injector can open into the ambient air. When other gases are used, the gas injector is connected to a suitable gas-source (not shown), such as a gas container. The second nozzles 24 are connected to the circulation pipe 20 via second pressure valves 22, which are configured to maintain the pressure of the gas-wastewater mixture inside the circulation pipe within predetermined level and simultaneously release pressurised gas-wastewater to flow through the second nozzles 24. Releasing the pressurised gas-wastewater mixture into an atmospheric pressure causes a sudden pressure drop in the gas-wastewater mixture, which generates gas containing microbubbles into the wastewater. It has been discovered, that when pressurised gas-wastewater suddenly enters to the atmospheric pressure, the diameter of the created microbubbles is very small, even less than 10 µm. The oxygen carried by the circulated wastewater acts as a primary oxygen source for the microbes growing in a biofilm on the surface of the filter bed material.

The amount and spraying capacity of the first and second nozzles is dimensioned to match to the pumping capacity of the first and second pumps. If the multiphase pump has only one operation speed, i.e. the pumping rate is constant, the flow rate through the nozzles is known from the dimensioning of the pump. The pressure of the gas-wastewater mixture inside the inflow and circulation pipes is adjusted with the first and second valves, i.e. by controlling the amount of wastewater released through the first and second valves to keep the pressure of the gas-wastewater mixture within desired range. Preferably, the second pressure valves and the first pressure valves are configured to maintain the pressure inside the inflow pipe and/or the circulation pipe within 5,0 bar- 7,0 bar. The first and second pressure valves are placed as close to the first and second nozzles as possible to maximise the retention time of the generated microbubbles in the wastewater.

The bioreactor further comprises an outflow pipe 8 for removing treated wastewater from the tank 2. The first end of the outflow pipe extends into the collection sink 9 of the second section 50 of the tank and the second end of the outflow pipe extends to a subsequent wastewater treatment unit, such as chemical treatment unit or settling basin (not shown in the figure). The first end of the outflow pipe may extend into the collection sink 9 through the bottom 5 of the tank or through the side wall of the tank. The outflow pipe may be provided with a third pump 32, for pumping the treated wastewater out of the tank or the wastewater may flow out of the tank with the aid of gravitation. The inflow pipe, the circulation pipe and the outflow pipe are provided with shut-off valves 30 locating on the suction sides of the first, second and third pumps.

The operation of the first and third pumps is coordinated to keep the amount of wastewater inside the tank within predetermined range and to achieve desired retention time for the wastewater inside the bioreactor. Preferably, there is a surface level sensor 34 inside the collection sink 9 for measuring the level of the wastewater and the second and/or the third pump(s) are configured to react to the changes of the surface level by adjusting the pumping rate to keep the surface level within predetermined range. The water circulation and the nano-micro bubble generation rate are optimized by measuring the wastewater's dissolved oxygen, redox and pH. Microbial growth can be assisted by feeding nutrients into the wastewater stream.

In fig. 2a an embodiment of the bioreactor according to the invention is depicted as a side elevation view and in fig. 2b a simplified horizontal cross section of the embodiment shown in fig 2a is depicted. In the embodiment shown in figs. 2a and 2b all the technical features and functionalities of the bioreactor shown in fig. 1 are arranged to a moveable container. Preferably the container is modified from a standard 20 feet (6058 mm) or 40 feet (12192 mm) shipping container. In modified 20 feet shipping containers the volume of the tank 2 can be about 20 m³ and in modified 40 feet shipping container the volume of the tank can be 40 to 50 m³.

In the embodiment shown in figs. 2a and 2b the side wall of the tank 2 has a rectangular shape including a first end wall 70, a second end wall 72, a first flank wall 74 and a second flank wall 76. The end walls, flank walls and bottom 5 define a box-like watertight space for the wastewater to be treated. In figure 2a the first flank wall is removed to make the inner structure of the tank visible. The partition 48 parallel to the first and second flank walls extends from the first end wall 70 towards the second end wall 72 dividing the tank into the first and second sections 49, 50 (fig. 2b). Preferably the size of the first and second sections is substantially equal. Between the end of the partition and the second end wall 72 there is a gap creating a flow port 51, through which wastewater can flow from the first section into the second section. The width of gap can be 1500 mm, for example.

The outer surfaces of the bottom, end walls and flank walls are covered with thermal insulation material (not shown). Outside the tank, on the opposing side of the first end wall 70, there is a technical room 78, which contains various technical devices of the bioreactor including the first pump 12, the second pump 10 and the third pump 32, PH-meter and devices for measuring dissolved oxygen content in the wastewater. The end wall of the container has a pair of openable doors 79 for entering into the technical room. The tank has a deck 64 attached to the upper edges of the side walls and flank walls. The purpose of the deck is to cover the tank from above and seal the tank substantially airtightly. The deck has at least one openable lid 66, which is hingedly connected to upper edge of the second flank wall 76. The deck and the lids are also provided with thermal insulation. Thanks to the thermal insulation of the tank, the deck and the lids, low ambient temperature doesn't inhibit the microbial process inside the tank. The suitable number of the lids depends on the length of the tank. The embodiment of the bioreactor shown in fig. 2a is arranged to a modified standard 40 feet (12192 mm) shipping container, wherein two opena-ble lids has proven to be practical. In fig. 2a the lids are in an opened position.

Near the bottom of the tank there is the inflow pipe 6, which extends into the first section 49 of the tank 2. The intake end of the inflow pipe is connected to a wastewater source (not shown), which can be wastewater pretreatment unit or a sewage network, for example. The first pump 12 is configured to pump wastewater from the wastewater source into the first section of the tank below the carrier material bed 4, i.e. into the collection sink 9. The part of the inflow pipe locating inside the tank is furnished with first nozzles 28, through which the wastewater is released into the tank. The distance between adjacent first nozzles in the direction of the inflow pipe can be about 1 000 mm.

The first pump 12 is configured to inject oxygen rich gas, such as air or pure oxygen, from gas-source (not shown) into the wastewater to create pressurised gas-wastewater mixture flowing inside the inflow pipe. The first nozzles 28 are connected to the inflow pipe 6 via first pressure valves 26 (fig. 2b), which are configured to maintain the pressure of the gas-wastewater mixture inside the inflow pipe within predetermined level and simultaneously release pressurised gas-wastewater to flow through the first nozzles 28. The first nozzles are inside the collection sink below the surface level of the wastewater. Releasing the pressurised gas-wastewater mixture into collection sink causes a sudden pressure drop in the gas-wastewater mixture, which generates gas containing microbubbles into the wastewater. The first pressure valves may have a control handle extending upwards from the valves above the level of wastewater and the control handles can be connected to a single rod (not show) for adjusting all the first pressure valves simultaneously.

The first end of the circulation pipe 20 extends through the first end wall 70 of the tank into the second section 50 near the bottom 5. The second pump 10 locating in the technical room 78 is configured to pump wastewater from the collection sink via the circulation pipe above the carrier material beds inside the first and second sections. Since the intake end of the circulation pipe is in the second section of the tank and wastewater enters into the first section of the tank, the wastewater must flow from the first section via the flow port 51 into the second section before entering the circulation pipe, whereby gas bubbles generated into the wastewater mix efficiently into the wastewater. The part of the circulation pipe locating above the carrier material beds is provided with a number of second nozzles 24, through which the wastewater is sprayed on top of the carrier material beds. The sprayed wastewater slowly percolates through the carrier material bed back to the lower part of the first and second sections. Second pump is configured to run continuously to circulate and aerate the wastewater flowing through the carrier material bed, when the bioreactor is in operation.

The second pump 10 is configured to inject oxygen rich gas, such as air or pure oxygen, into the wastewater to create pressurised gas-wastewater mixture flowing inside the circulation pipe. The second nozzles 24 are connected to circulation pipe 20 via second pressure valves 22, which are configured to maintain the pressure of the gas-wastewater mixture inside the circulation pipe within predetermined level and simultaneously release pressurised gas-wastewater to flow through the second nozzles 24. Releasing the pressurised gas-wastewater mixture into an atmospheric pressure causes a sudden pressure drop in the gas-wastewater mixture, which generates gas containing microbubbles into the wastewater, which is sprayed on top of the carrier material beds.

The first and second pumps can be structurally substantially similar, but the pumping rate of the first and second pumps can be different. Typically, the flow rate of the incoming wastewater pumped by the first pump 12 is significantly lower than the flow rate of the wastewater circulated by the second pump 10. The flow rate of the incoming wastewater can be 5 m³/h and the flow rate of the circulated wastewater can be 50 m³/h for example. Since the amount of oxygen rich gas injected correlates with the flow rate of the wastewater, the second pump provides the majority of the oxygen demand of the biofilm growing inside bioreactor.

The outflow pipe 8 extends from the technical room 78 through the first end wall 70 into the lower part of the second section 50 of the tank. The third pump 32 locating in the technical room is connected to the outflow pipe for pumping the treated wastewater out of the tank to a subsequent wastewater treatment unit, such as chemical treatment unit or settling basin (not shown in the figure). Since the intake end of the outflow pipe is in the second section of the tank and wastewater enters into the first section of the tank, the incoming wastewater cannot flow directly to the outflow pipe.

When the bioreactor is in operation, the lids 66 are closed, whereby is tank is sealed substantially airtightly. The oxygen rich gas injected into the wastewater and the gases produced by the microbes during wastewater purification process increase the pressure inside the tank. The bioreactor is provided with at least one venting pipe 68 extending through the deck 64. The venting pipe(s) is/are configured to act as pressure balancing means, which prevent the pressure inside the tank from rising above the predetermined limit, preferably above the ambient pressure. The venting pipes are connected to a scrubber 80, for removing harmful substances, such as ammonia, from the gas flowing out through the venting pipes.

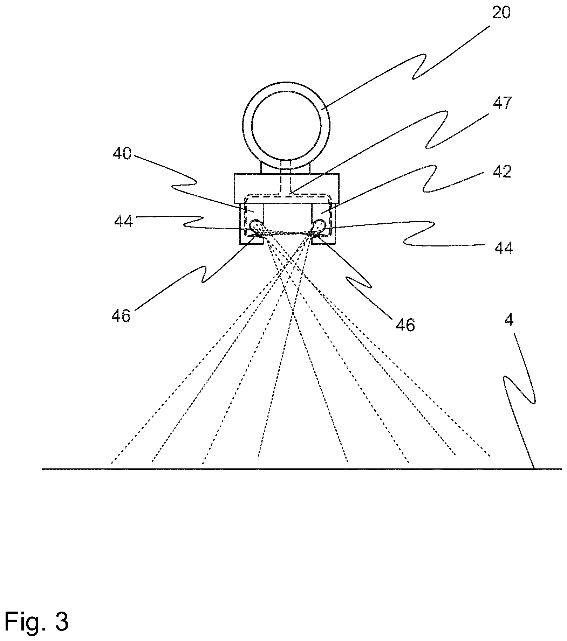

In figure 3 an example of a second nozzle belonging to the bioreactor is shown as a side elevation. In the bioreactor the second nozzles are connected to the circulation pipe 20 via second pressure valves (not shown). The second nozzles comprise a first jet pipe 40 and a second jet pipe 42. The first and second jet pipes are mirror images of each other and they include an aperture 46 configured to generate a high pressure wastewater jet. The apertures are connected to the circulation pipe via a conduit 47. The jet pipes have a cavity in the side surface of jet pipe into which cavity the aperture opens. The cavity has a semi-circulate bottom and two flank surfaces in downward slanted position extending from the edges of the bottom towards the side surface of the jet pipe. In the bioreactor the first and second jet pipes are in parallel vertical positions, wherein the first jet pipe 40 is configured to direct the wastewater jet towards the cavity of the second jet pipe 42 and the second jet pipe is configured to direct the wastewater jet towards the cavity of the first jet pipe. The surfaces of the cavities act as bouncing surfaces 44, which bounce the generated wastewater jet obliquely downward towards the carrier material bed 4. The bounced wastewater jets are directed to collide and to form a combined coniform wastewater spray landing onto the surface of the carrier material bed. The bouncing and colliding of the wastewater jets generated by the first and second jets increases turbulence and disperses the wastewater into a fine mist-like spray, which spreads evenly on the surface of the carrier bed material.

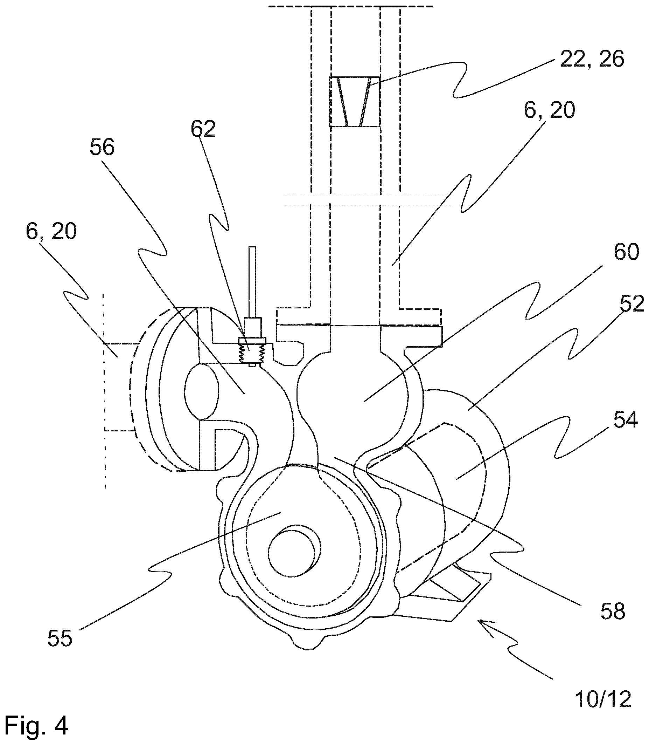

In figure 4 the multiphase pump belonging to the apparatus shown in fig. 1 is depicted as a partial cross-section. The first and second pumps 12, 10 i.e. the multiphase pumps, are structurally similar, whereby figure 4 and the following explanation applies both to the first pump and to the second pump. However, the pumping capacity of the first and second pumps may be unequal. In the following explanation term "pump" refers both to the first and to the second pump.

The pump comprises a casing 52, an impeller 55 and a motor 54 for rotating the impeller. The casing encloses a chamber comprising an inflow channel 56 and an outflow channel 58. The impeller is locating inside said chamber between the inflow and outflow channels. The impeller is a disk-like part having grooves or indentation (not shown) on the outer circumference of the impeller for moving water from the inflow channel to the outflow channel. The inflow and outflow channels are provided with flanges for connection to the inflow and circulation pipes 6, 20 respectively.

In the inflow channel 56 of the pump there is a gas injector 62, for injecting gas into the wastewater flowing through the inflow channel to create a gas-wastewater mixture. The injected gas is preferably air or pure oxygen, but it can contain also ozone or carbon dioxide. When air is used as oxygen rich gas, the free end of the injector can open into the ambient air. When other gases are used, the injector is connected to a suitable gas-source (not shown), such as a gas container.

The outflow channel contains an enlargement between the impeller and the flange defining a pressure chamber 60. The pressure chamber is connected to the inflow and circulation pipes 6, 20 respectively which lead into the first and second pressure valves 22, 26 and first and second nozzles 24, 28 respectively. The purpose of the pressure valves is to create and maintain the elevated pressure of the gas-wastewater mixture inside the inflow and circulation pipes, when the pumps are in operation. The pressurised gas-wastewater -mixture is released out of the pipes through pressure valves to create micro bubbles into the released wastewater. Preferably, the pressure inside the inflow and circulation pipes is 5 to 7 bar, when the pumps are in operation.

The sufficient water pumping rate and air injection capacity of the pump depends on the amount of the wastewater to be treated and the nature of the wastewater. For example, a pump having a water pumping capacity of 5 m³/h and air injection capacity of 5-6 litre/min can be used in small scale apparatuses and a pump having a water pumping capacity of 15 m³/h and air injection capacity of 15-20 litre/min can be used in large scale apparatuses.

Some preferred embodiments of the apparatus and method and has been disclosed above. The invention is not limited to the solutions explained above, but the invention can be applied in different ways within the limits set by the patent claims.

### Reference Signs:

| | | | |
|---|---|---|---|
| 2 | tank | 47 | conduit |
| 3 | side wall | 48 | partition |
| 4 | carrier material bed | 49 | first section |
| 5 | bottom | 50 | second section |
| 6 | inflow pipe | 51 | flow port |
| 7 | filter support | 52 | casing |
| 8 | outflow pipe | 55 | impeller |
| 9 | collection sink | 54 | motor |
| 10 | second pump | 56 | inflow channel |
| 12 | first pump | 58 | outflow channel |
| 20 | circulation pipe | 62 | gas injector |
| 22 | second pressure valve | 64 | deck |
| 24 | second nozzle | 66 | lid |
| 26 | first pressure valve | 68 | venting pipe |
| 28 | first nozzle | 70 | first end wall |
| 30 | shut-off valve | 72 | second end wall |
| 32 | third pump | 74 | first flank wall |
| 34 | surface level sensor | 76 | second flank wall |
| 36 | overflow chute | 78 | technical room |
| 38 | overflow pipe | 79 | door |
| 40 | first jet pipe | 80 | scrubber |
| 42 | second jet pipe | | |
| 44 | bouncing surface | | |
| 46 | aperture | | |

## Claims

1. A bioreactor including a tank (2), a carrier material bed (4) inside said tank (2), an inflow pipe (6), a first pump (12) for pumping wastewater into the tank (2) via the inflow pipe (6), a second pump (10) and a circulation pipe (20) for pumping the wastewater above the carrier material bed (4) and second nozzles (24) for spraying the wastewater on top of the carrier material bed (4), **characterised in that** said second pump (10) is a multiphase pump comprising a gas injector (62) for injecting gas, such as air or oxygen, to the wastewater to create pressurized gas-wastewater mixture.

2. The bioreactor according to claim 1, **characterised in that** the circulation pipe (20) has at least one second pressure valve (22) configured to maintain the pressure of the gas-wastewater mixture inside the circulation pipe (20) and to release pressurised gas-wastewater to flow through the second nozzles (24).

3. The bioreactor according to claim 1 or 2, **characterised in that** said second nozzles (24) comprise a first jet pipe (40) and a second jet pipe (42), the first and second jet pipes (40, 42) including an aperture (46) configured to generate a wastewater jet and a bouncing surface (44) configured to bounce the generated wastewater jet towards the carrier material bed (4).

4. The bioreactor according to claim 3, **characterised in that** the first jet pipe (40) is configured to direct the wastewater jet towards the bouncing surface (44) of the second jet pipe (42) and the second jet pipe (42) is configured to direct the wastewater jet towards the bouncing surface (44) of the first jet pipe (40) and the bouncing surfaces (44) of the first and second jet pipes (40, 42) are configured to direct the bounced wastewater jets to collide to generate a combined wastewater spray directed towards the carrier material bed (4).

5. The bioreactor according to any of the claims 1 to 4, **characterised in that** said first pump (12) is a multiphase pump comprising a gas injector (62) for injecting gas, such as air or oxygen, to the wastewater to create pressurized gas-wastewater mixture.

6. The bioreactor according to any of the claims 1 to 5, **characterised in that** the inflow pipe (6) has a discharge end inside the tank (2) below the carrier material bed (4), first nozzles (28) for discharging wastewater from the inflow pipe (6) and at least one first pressure valve (26) configured to maintain the pressure of the gas-wastewater mixture inside the inflow pipe (6) and to release pressurised gas-wastewater to flow through the first nozzles (28).

7. The bioreactor according to any of the claims 5 or 6, **characterised in that** the first pump (12) and/or the second pump (10) are/is configured to generate 5,0 bar-7,0 bar pressure to the gas-wastewater mixture.

8. The bioreactor according to any of the claims 6 or 7, **characterised in that** the at least one second pressure valve (22) and/or the at least one first pressure valve (26) are/is configured to maintain 5,0 bar- 7,0 bar pressure inside the inflow pipe (6) and/or the circulation pipe (20).

9. The bioreactor according to any of the claims 1 to 8, **characterised in that** the apparatus further comprises an outflow pipe (8) and a third pump (32) for removing treated wastewater from the tank (2).

10. The bioreactor according to any of the claims 1 to 9, **characterised in that** the tank (2) comprises a partition (48) dividing the tank (2) to a first section (49) and to a second section (50) and a flow port (51) connecting the first and second sections (49, 50).

11. The bioreactor according to claim 10, **characterised in that**, the inflow pipe (6) extends into the first section (49) and the intake ends of the circulation pipe (20) and the outflow pipe (8) extend into the second section (50).

12. The bioreactor according to any of the claims 1 to 11, **characterised in that**, the tank (2) comprises a deck (64) for covering and sealing the tank (2), which deck (64) has at least one openable lid (66), and at least one venting pipe (68) for lowering the pressure inside the tank (2).

13. A method of treating wastewater in a bioreactor according to any of the claims 1 to 12, **characterised in that** the method comprises steps of pumping wastewater from the tank (2) above the carrier material bed (4), injecting gas, such as air or oxygen, to the wastewater to create pressurized gas-wastewater mixture and releasing the pressurized gas-wastewater mixture to flow through the second nozzles (24) causing a pressure drop in the gas-wastewater mixture generating gas containing microbubbles into the wastewater sprayed through the second nozzles (24) on top of the carrier material bed (4).

14. A method of treating wastewater in according to claim 13, **characterised in that** the method comprises steps of pumping wastewater into the tank (2) via an inflow pipe (6), injecting gas, such as air or oxygen, to the wastewater to create pressurized gas-wastewater mixture and releasing the pressurized gas-wastewater mixture from the inflow pipe (6) into the tank (2) causing a pressure drop in the gas-wastewater mixture generating gas containing microbubbles into the released wastewater.

15. The method according to claim 13 or 14, **characterised in that** the method comprises steps generating pressurized gas-wastewater mixture, which, when released to or near the atmospheric pressure, creates into the wastewater microbubbles having a diameter less than 10 µm.
